# EUROPEAN PATENT APPLICATION

(11) **EP 4 832 204 A1**
(43) Date of publication of application: **28.10.2026**
(21) Application number: 25382424.7
(22) Date of filing: 25.04.2025
(51) Int. Cl.: H01M 50/264

(54) **PRESSING DEVICE FOR A BATTERY CELL STACK**

(71) Applicant: Battbelt S.L., 20500 Arrasate-Mondragon (ES)
(72) Inventor: ZURBITU GONZALEZ, Javier, 20500 Arrasate-Mondragon (ES)
(74) Representative: Galbaian S.Coop.

(57) **Abstract**

Pressing device for a battery cell stack (10) comprising a plurality of battery cells (11) arranged stacked in a stacking direction. The pressing device (1) comprises a plurality of cell holders (2) arranged one after another in the stacking direction, such that at least one cell is arranged between every two adjacent cell holders (2), each cell holder (2) being coupled to each adjacent cell holder (2) by means of connecting means (3a). The connecting means (3a) comprise a stimulus-sensitive element made of a shape memory material, the stimulus-sensitive element changing from a first configuration to a second configuration in response to a stimulus, the connecting means (3a) coupling the cell holders (2) when the stimulus-sensitive element is in the first configuration, and the connecting means (3a) releasing the cell holders (2) when the stimulus-sensitive element is in the second configuration.

## Description

### TECHNICAL FIELD

The present invention relates to a pressing device for a battery cell stack, a battery incorporating said pressing device, and a method for removing at least one battery cell from said battery.

### PRIOR ART

Energy storage systems or batteries made up of a plurality of battery cells arranged adjacent to one another forming a stack are known today. However, it is known that battery cells tend to change in thickness due to different factors such as temperature, state of charge, or aging. Exerting pressure on the battery cells forming the cell stack is also known, given that the pressure exerted on said cells directly influences the efficiency and degradation thereof, such that the more constant the pressure exerted on the battery cells is throughout their life cycle, the better their behavior and the less their degradation will be.

KR2006060800A describes a pressing device for a battery module comprising a plurality of unit cells that are arranged at regular intervals to form a stack. The pressing device comprises fastening plates that are placed on the outside of the outermost unit cells, connecting bars that are placed between the fastening plates and tightening the fastening plates, and nuts fastened to the connecting bars. At least one elastic member is interposed between the fastening plates and the outermost unit cells.

### DISCLOSURE OF THE INVENTION

The invention relates to a pressing device for a battery cell stack, a battery incorporating said pressing device, and a method for removing at least one battery cell from said battery, as defined in the claims.

A first aspect of the invention is related to a pressing device for a battery cell stack. The pressing device of the invention is a pressing device for a battery cell stack comprising a plurality of battery cells which are arranged stacked in a stacking direction, each battery cell comprising an anode, a cathode, an electrolyte. The pressing device comprises a plurality of cell holders arranged one after another in the stacking direction, such that at least one battery cell is arranged between every two adjacent cell holders, each cell holder being coupled to each adjacent cell holder by means of connecting means.

The connecting means comprise a stimulus-sensitive element made of a shape memory material, the stimulus-sensitive element changing from a first configuration to a second configuration in response to a stimulus. The connecting means couple the cell holders when the stimulus-sensitive element is in the first configuration, and the connecting means release the cell holders when the stimulus-sensitive element is in the second configuration. The pressing device of the invention therefore comprises releasable connection means which, instead of being mechanically released upon application of a human force, or by activation of an external mechanical actuator, the connecting means are automatically and rapidly releasable upon application of an external stimulus such as a temperature change or a magnetic field that changes the stimulus-sensitive element from the first configuration to the second configuration.

A second aspect of the invention is related to a battery comprising a battery cell stack and the pressing device of the invention.

A third aspect of the invention is related to a method for removing at least one battery cell from the battery of the invention.

In this way, the method of the invention allows at least one battery cell to be rapidly and easily removed from the battery cell stack, while the rest of the battery cells are maintained assembled in the cell stack.

These and other advantages and features of the invention will become apparent in view of the figures and the detailed description of the invention.

### DESCRIPTION OF THE DRAWINGS

Figure 1 shows a perspective view of a first embodiment of the battery of the invention comprising a first embodiment of the pressing device of the invention.
Figure 2 shows a detailed view of the connecting means of the first embodiment of the pressing device, the connecting means being coupled.
Figure 3 shows a sectioned view of the connecting means of Figure 2.
Figure 4 shows a sectioned view of the connecting means of the first embodiment of the pressing device, the connecting means being released.
Figure 5 shows a detailed view of the connecting means of a second embodiment of the pressing device of the invention, the connecting means being coupled.
Figure 6 shows a detailed view of the connecting means of the second embodiment of the pressing device, the connecting means being released.
Figure 7 shows a detailed view of the connecting means of a third embodiment of the pressing device of the invention, the connecting means being coupled.
Figure 8 shows a section view of the connecting means of figure 7.
Figure 9 shows a section view of the connecting means of the third embodiment of the pressing device, the connecting means being released.
Figure 10 shows a detailed view of the connecting means of a fourth embodiment of the pressing device of the invention, the connecting means being coupled.
Figure 11 shows a top view of the connecting means of figure 10.
Figure 12 shows a top view of the connecting means of the fourth embodiment of the pressing device, the connecting means being released.
Figure 13 shows a perspective view of a second embodiment of the battery of the invention.

### DETAILED DISCLOSURE OF THE INVENTION

The invention is related to a pressing device 1 for a battery cell stack 10 comprising a plurality of battery cells 11 which are arranged stacked in a stacking direction. Each battery cell 11 comprises an anode, a cathode, and an electrolyte, not shown in the figures. The battery cells 11, as it is the case for the battery cells 11 shown in the figures, usually comprise a casing where the respective anode, cathode and electrolyte are housed.

The pressing device 1 of the invention is valid for conventional battery cells 11 whose anode and cathode are immersed in a liquid electrolyte, as well as for solid-state battery cells 11 whose electrolyte is a solid electrolyte interposed between the anode and the cathode.

The pressing device 1 of the invention comprises a plurality of cell holders 2 arranged one after another in the stacking direction, such that at least one battery cell 11 is arranged between every two adjacent cell holders 2, each cell holder 2 being coupled to each adjacent cell holder 2 by means of connecting means 3a, 3b, 3c, 3d. The connecting means 3a, 3b, 3c, 3d comprise a stimulus-sensitive element made of a shape memory material, the stimulus-sensitive element changing from a first configuration to a second configuration in response to a stimulus, the connecting means 3a, 3b, 3c, 3d coupling the cell holders 2 when the stimulus-sensitive element is in the first configuration, and the connecting means 3a, 3b, 3c, 3d releasing the cell holders 2 when the stimulus-sensitive element is in the second configuration.

In one embodiment, the shape memory material of the stimulus-sensitive element is a shape memory alloy or a shape memory polymer that responds to a temperature change. In this case, the stimulus is a temperature change, the stimulus-sensitive element being in a first configuration when the temperature of the stimulus-sensitive element is in a first temperature range, and the stimulus-sensitive element being in a second configuration when the temperature of the stimulus-sensitive element is in a second temperature range. The first temperature range comprises the temperatures of the stimulus-sensitive element when the pressing device 1 is under working conditions.

In the context of the invention, when the stimulus is a temperature change, said stimulus is applied locally to the stimulus-sensitive element.

Shape memory alloys are metal alloys which, after strain, are capable of recovering their original shape when they are subjected to a temperature change. This characteristic of shape memory alloys is due to the phase change referred to as martensitic transformation that takes place in said materials. Martensitic transformation is defined as a crystallographically reversible and instantaneous phase transformation, in which the atoms move in a coordinated manner like in shear mechanisms (Otsuka, K.; Wayman, C. (1999) Shape Memory Materials. Cambridge University Press, UK). The main characteristic of said shape memory alloys is their capacity to recover considerably large strains (of up to 8%) by means of the reversible transformation between phases (austenitic and martensitic). This transformation can be induced in two ways, either by stress, resulting in the superelastic property or superelastic effect of these materials; or by temperature, resulting in the shape memory effect when they are subjected to a temperature change. Common shape memory alloys include nickel-titanium (Nitinol), copper-aluminum-nickel, and copper-zinc-aluminum.

In an alternative embodiment, the shape memory material is a magnetic shape memory alloy, the stimulus being a magnetic field configured to change the stimulus-sensitive element from the first configuration to the second configuration.

Magnetic shape memory alloys can be deformed by applying a magnetic field, which induces the reorientation of martensitic variants, resulting in significant strain, and can return to their original shape when the magnetic field is removed.

In an alternative embodiment, the shape memory material is a shape memory polymer that responds to a light stimulus, the stimulus being the application of a light configured to change the stimulus-sensitive element from the first configuration to the second configuration.

Shape memory polymers utilize a reversible change in their molecular chains to recover their original shape when they are either subjected to temperature, light, moisture, heat, solvents, etc. Some common shape memory polymers include polyurethanes, poly(lactide), and ethylene-vinyl acetate.

In the context of the invention, the pressing device 1 is considered to be under working conditions when said pressing device is mounted on a battery cell stack 10 so that its battery cells 11 can be charged or discharged. Under said working conditions the stimulus-sensitive element is in the first configuration, the connection means 3a, 3b, 3c, 3d being thus coupling the cell holders 2. In an embodiment of the pressing device 1 in which the stimulus is a temperature change, said working conditions refer to the temperature of the pressing device and therefore to the temperature of the stimulus-sensitive element. The stimulus-sensitive element is thus selected such that the working temperature range of the stimulus-sensitive element is within the first temperature range.

In a preferred embodiment, the stimulus-sensitive element is made of a two-way shape memory material, the stimulus-sensitive element being configured to have a first shape in the first configuration, and a second shape in the second configuration.

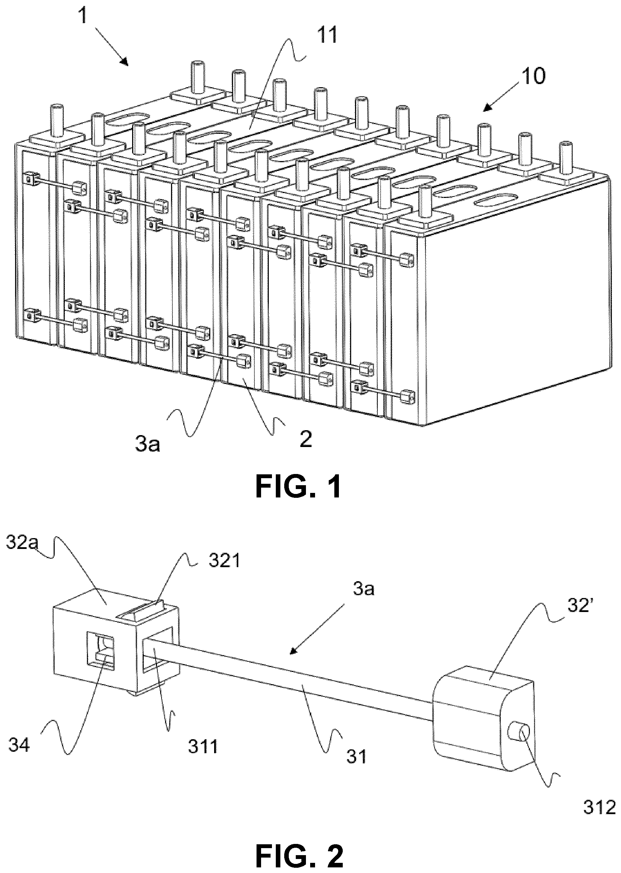

Figures 1 to 4 show a first embodiment of the pressing device 1 of the invention. In this embodiment, the connecting means 3a comprise a support element 32a and 32' fixed to each of the two cell holders 2, and an elastic rod 31 coupled to both support elements 32a and 32' when the stimulus-sensitive element of the connecting means 3a is in the first configuration. The elastic rod 31 is configured to allow said cell holders 2 to move apart or move closer together in the stacking direction with an increase or a decrease in the thickness of the at least one battery cell 11 arranged between them exerting a pressure on said at least one battery cell 11 when the stimulus-sensitive element of the connecting means 3a is in the first configuration. The elastic rod 31 is thus configured to exert a certain pressure on said at least one battery cell 11 when the stimulus-sensitive element is in the first configuration.

In a preferred embodiment, the elastic rod 31 is made of a shape memory alloy, a final transformation temperature of the austenitic phase A_{f} of said shape memory alloy being lower than a temperature of said elastic rod 31 while the pressing device 1 is under working conditions. In this way, while the pressing device 1 is under working conditions, the elastic rod 31 behaves superelastically due to the stress-induced martensitic transformation, so that the pressing device 1 exerts a substantially constant pressure on the battery cells 11 regardless of the expansion of the elastic rod 31 at any given time, improving in this way the behaviour of said battery cells 11 throughout their entire life cycle and reducing their degradation. This embodiment is very advantageous, as it prevents the pressure exerted on the battery cells 11 from being incremental, as is the case in the prior art.

The superelastic behavior, superelastic effect, or superelasticity of the shape memory alloys is associated with the stress-induced martensitic transformation and results in a strain induced by the application of a mechanical load which is recoverable upon removing same, provided that the temperature is greater than A_{f}, which is the final temperature of the austenitic transformation. A superelastic strain cycle therefore begins at a temperature that is high enough for the stable phase to be the austenitic phase. The A_{f} temperature is a property of each shape memory alloy. As a result, for the shape memory alloy to exhibit the superelastic property, the elastic rod 31 will be manufactured from a shape memory alloy the A_{f} of which is lower than the working temperature of the pressing device 1.

Alternatively, the elastic rod 31 may be made of an elastic material, a hyperelastic material, a viscoelastic material or an elastoplastic material with an elastic behavior when the pressing device 1 is under working conditions.

In the first embodiment, the elastic rod 31 comprises two rod ends 311 and 312, each rod end 311 and 312 being coupled to a respective support element 32a and 32', such that one of said rod ends 311 is releasable from the respective support element 32a when the stimulus-sensitive element of the connecting means 3a is in the second configuration, the elastic rod 31 comprising a rod head 36 at the at least one releasable end 311.

In the first embodiment, when the connecting means 3a couple the cell holders (2), the rod head 36 is housed in the respective support element 32a and the stimulus-sensitive element is a retaining element 34 arranged in said support element 32a and configured to clamp the elastic rod 31 when it is in the first configuration, such that, when the retaining element 34 is in the second configuration, said retaining element 34 is configured to allow the rod head 36 to pass through said retaining element 34.

In the first embodiment, the retaining element 34 is preferably U-shaped. Said U-shaped retaining element 34 comprises two legs facing each other. In the first configuration there is a first distance between said legs, such that the legs clamp the elastic rod 31 which prevents the rod head 36 from passing between said legs. Thus, in said first configuration, the rod head 36 abuts on the legs of the retaining element 34. However, in the second configuration there is a second distance between said legs which allows the rod head 36 passing through said legs, said second distance being greater than the first distance. Thus, in said second configuration the rod head 36 no longer abuts on the legs of the U-shaped retaining element 34 but is instead able to pass through them. For this purpose, the support element 32b comprises an internal housing configured to receive the U-shaped retaining element 34 when said retaining element 34 is in the second configuration, allowing the rod head 36 to pass through its legs instead of abutting on them.

In the first embodiment, the support element 32a in which the retaining element 34 is housed additionally comprises a plug and play type blocking element 321 configured to couple the releasable end 311 of the elastic rod 31 with a click and configured to block the retaining element 34 when the retaining element 34 is in the first configuration. Thus, the blocking element 321 is configured to keep the retaining element 34 into the respective support element 32a when said retaining element 34 is in the first configuration.

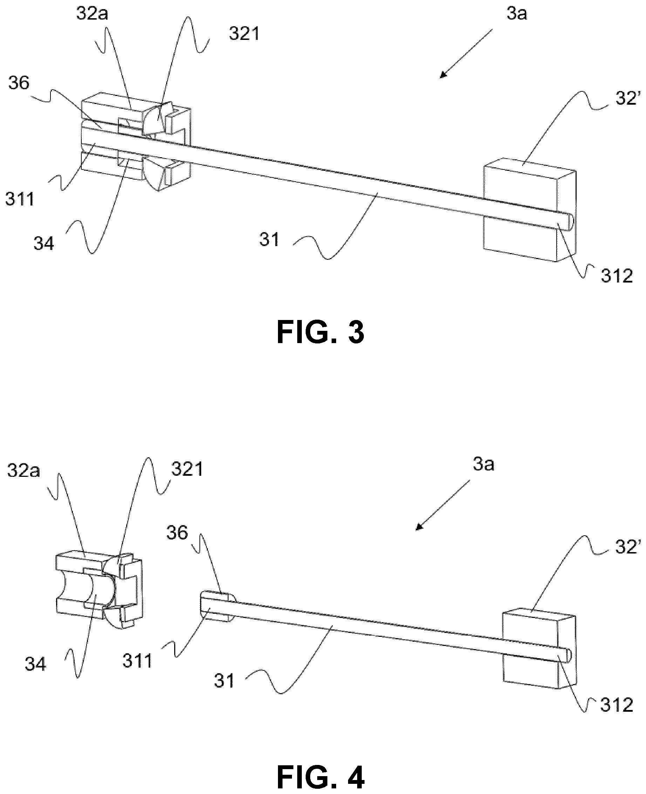

In said first embodiment, the blocking element 321 comprises two pivotable parts arranged facing each other and defining an empty space between them big enough for the rod head 36 to pass between them through said empty space when the blocking element 321 is in an open position. Both pivotable parts are spring actuated, said springs forcing said pivotable parts to a position corresponding to a closed position of the blocking element 321. In said closed position the empty space between the pivotable parts is not big enough for the rod head 36 to pass through. The retaining element 34 comprises two projections, each projection configured to collaborate with a pivotable part. When the retaining element 34 is in the first configuration and both the rod head 36 and the retaining element 34 are arranged into the support element 32a as shown in figures 2 and 3, the springs force the pivotable parts to the position corresponding to the closed position of the blocking element 321, the retaining element 34 abutting on said pivotable parts, which are configured to prevent the retaining element 34 to pass between them. In said first configuration the pivotable parts abut on the corresponding projections. However, when the retaining element 34 is in the second configuration, as shown in figure 4, there is a second distance between its legs such that the projections push the corresponding pivotable parts moving the blocking element 321 to its open position, and thus, allowing the rod head 36 to pass also through said pivotable parts.

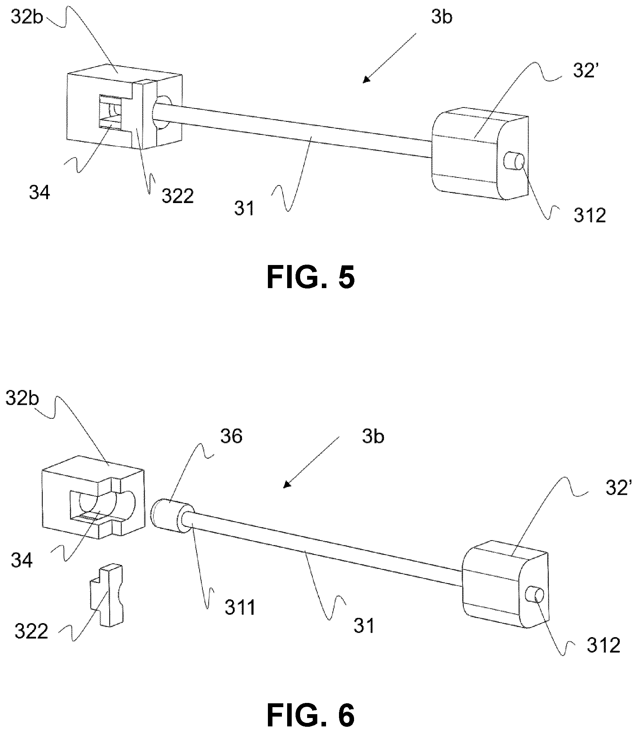

Figures 5 and 6 disclose the connecting means 3b of a second embodiment of the pressing device 1 of the invention. This second embodiment differs from the first embodiment in that the support element 32b comprises a wall 322 instead of comprising a plug and play type blocking element 321, the retaining element 34 abutting on the wall 322 when the retaining element 34 is in the first configuration, as shown in figure 5. Said wall 322 is configured to keep the retaining element 34 into the respective support element 32b when said retaining element 34 is in the first configuration. In this second embodiment, said wall 322 is part of a separate piece of the support element 32b, which is shown in figure 6 detached from said support element 32b, but which is arranged fixed to said support element 32b when the pressing device 1 is under working conditions.

Preferably, the retaining element 34 of the first and second embodiments is made of a shape memory alloy that responds to a temperature change, and the temperatures in the first temperature range are below the starting transformation temperature of the martensitic phase Mₛ of the shape memory alloy the retaining element 34 is made of, more preferably the retaining element 34 is in a partially detwinned martensite phase when its temperature is in the first temperature range, and the temperatures in the second temperature range are above the starting transformation temperature of the austenitic phase Aₛ of the shape memory alloy it is made of, more preferably above the final transformation temperature of the austenitic phase A_{f}. Therefore, to release the connection means 3a, 3b is enough to heat the retaining element 34 above the starting transformation temperature of the austenitic phase Aₛ of the shape memory alloy it is made of, and more preferably above the final transformation temperature of the austenitic phase A_{f}.

Alternatively, in order to couple the cell holders 2 with the connection means 3a, 3b of the first and second embodiments, the temperature of the retaining element 34 should be below the starting transformation temperature of the martensitic phase Mₛ of the shape memory alloy it is made of, and it should be deformed until it is in a partially detwinned martensite phase, Then, the retaining element is disposed clamping the elastic rod 31, and both, the retaining element 34 and the rod head 36 are arranged into the support element 32a, 32b. Additionally, in the embodiment of figures 5 and 6, the separate piece comprising the wall 322 is fixed to the support element 32b.

In an alternative embodiment wherein the elastic rod 31 is made of a shape memory alloy whose temperature is greater than the final transformation temperature of the austenitic phase Af of said shape memory alloy while the pressing device 1 is under working conditions, in order to couple the cell holders 2 with the connection means 3a, 3b of the first and second embodiments, the elastic rod 31 may be cooled to a temperature under the starting transformation temperature of the martensitic phase Mₛ of its shape memory alloy, preferably under its final transformation temperature of the martensitic phase M_{f} of its shape memory alloy in order to reduce the load necessary to stretch it in order to couple its releasable end 311 with the corresponding support element 32a, 32b, so that when working conditions are reached both cell holders 2 get coupled.

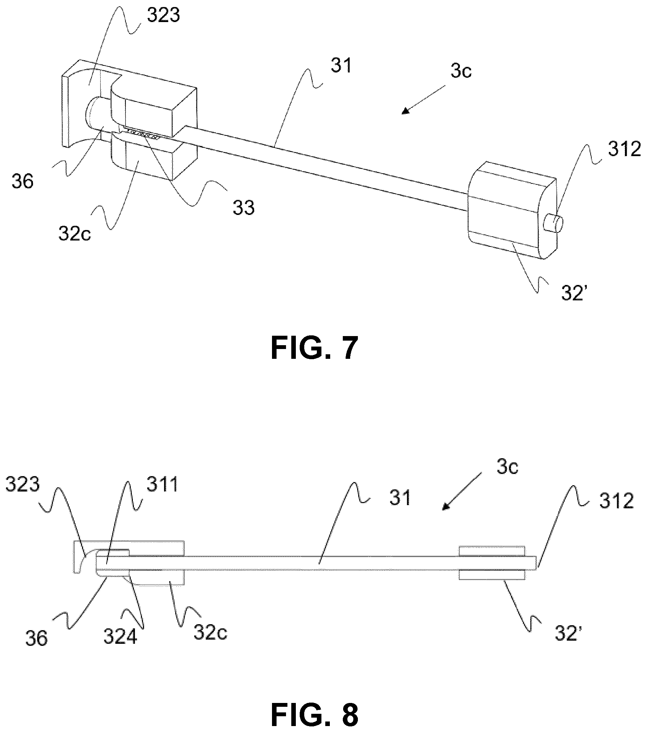

In a third embodiment, shown in figures 7 to 9, the stimulus-sensitive element is the elastic rod 31, the connecting means 3c further comprising a compression spring 33 housed in the support element 32c from which the releasable end 311 releases, such that in the first configuration the compressive force of the elastic rod 31 is greater than the compressive force of the compression spring 33. In this way, the rod head 36 abuts and compresses said compression spring 33 and thus remains housed in a housing 324 of said support element 32c, and in the second configuration the compressive force of the compression spring 33 is greater than the compressive force of the elastic rod 31 such that the compression spring 33 expands and pushes the rod head 36 out of the housing 324 of said support element 32c.

In this third embodiment, the support element 32c, from which the releasable end 311 releases, comprises a curved wall 323 facing the rod head 36 in the first configuration, said curved wall 323 being configured to direct the rod head 36 out of said support element 32c in the second configuration.

In the third embodiment, the elastic rod 31 is preferably made of a shape memory alloy that responds to a temperature change, wherein the temperatures in the second temperature range are lower than the starting transformation temperature of the martensitic phase Mₛ of said shape memory alloy, preferably lower than its final transformation temperature of the martensitic phase M_{f}. Therefore, to release the connection means 3c is enough to cool said elastic rod 31 to a temperature below the starting transformation temperature of the martensitic phase Mₛ of the shape memory alloy the elastic rod 31 is made of, and more preferably below the final transformation temperature of the martensitic phase M_{f}. Preferably, the temperatures in the first temperature range are greater than the final transformation temperature of the austenitic phase A_{f} of the shape memory alloy the elastic rod 31 is made of.

Alternatively, in order to couple the cell holders 2 with the connection means 3c of the third embodiment, once the elastic rod 31 has been cooled to a temperature below the starting transformation temperature of the martensitic phase Mₛ of the shape memory alloy it is made of, and more preferably below the final transformation temperature of its martensitic phase M_{f}, the compression spring 33 and the rod head 36 may be arranged into the support element 32c so that, as working conditions are again reached and consequently the temperature of the elastic rod 31 increases reaching the initial transformation temperature of the austenitic phase Aₛ, the elastic rod 31 begins to recover its shape in its first configuration, until the compressive force of the elastic rod 31 is greater than the compressive force of the compression spring 33, the rod head 36 getting housed in the housing 324 of the support element 32c.

In the third embodiment shown in figures 7 to 9, the support element 32c is preferably designed to house the rod head 36.

In an alternative embodiment, the support element 32c is preferably designed to house two or more compression springs 33, said compression springs 33 arranged parallel to the elastic rod 31. However, in other embodiments not shown in the figures, the support element 32c may be designed to house the at least one compression spring 33 in a different position, preferably in the direction of the trajectory of the rod head 36 when it is pushed against the curved wall 323 in the second configuration.

In an alternative embodiment of the pressing device 1, the connecting means 3c comprise an actuator housed in the support element 32c from which the releasable end 311 releases, the stimulus-sensitive element being said actuator. In the first configuration of said actuator, said actuator is configured to allow the rod head 36 to abut on the actuator and remain housed in a housing 324 of said support element 32c. However, in a second configuration, the actuator is configured to push the rod head 36 out of the housing 324 of the support element 32c. The actuator is preferably a compression spring 33 made of a shape memory material.

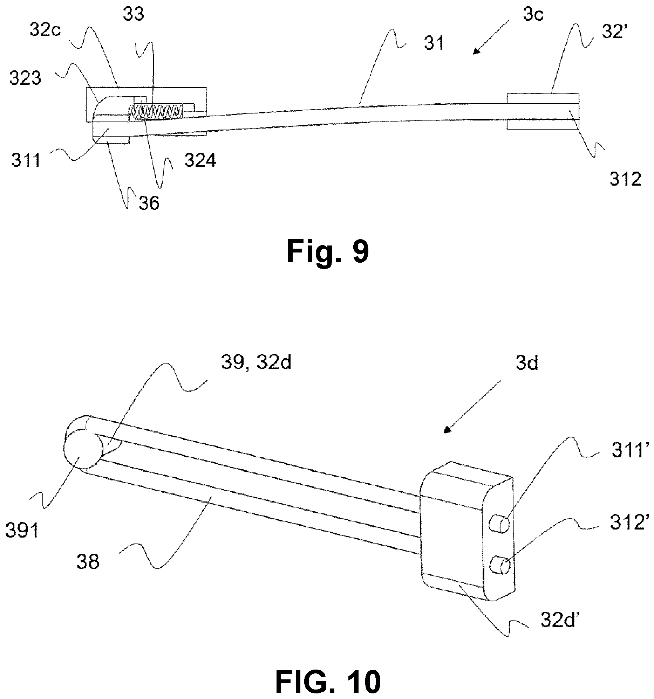

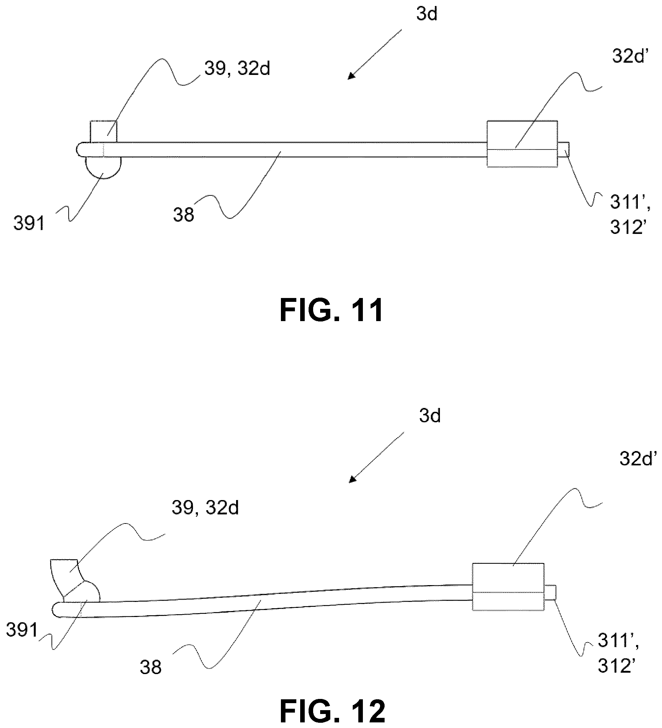

In a fourth embodiment, shown in figures 10 to 12, the elastic rod 38 of the connecting means 3d has a first end 311' and a second end 312', both ends 311' and 312' being fixed to one of the support elements 32d', and the stimulus-sensitive element being the other support element 32d, said other support element 32d being in the form of a protruding pin 39, the elastic rod 38 surrounding the protruding pin 39 and abutting on it when the protruding pin 39 is in the first configuration, such that in the second configuration said protruding pin 39 is deformed allowing the elastic rod 38 to be released from said protruding pin 39.

The protruding pin 39 preferably comprises a pin head 391 at its free end, said pin head 391 being configured to prevent the elastic rod 38 from releasing from the protruding pin 39 while the protruding pin 39 is in the first configuration.

The protruding pin 39 is made preferably of a shape memory alloy that responds to a temperature change, such that the temperatures in the first temperature range are greater than the final transformation temperature of the austenitic phase A_{f} of the shape memory alloy the protruding pin 39 is made of, and the temperatures in the second temperature range are lower than the starting transformation temperature of the martensitic phase Mₛ of said shape memory alloy, preferably lower than its final transformation temperature of the martensitic phase M_{f}. Therefore, to release the connection means 3d it is enough to cool the protruding pin 39 below the starting transformation temperature of the martensitic phase Mₛ of the shape memory alloy it is made of, and preferably below the final transformation temperature of its martensitic phase M_{f}.

Alternatively, in order to couple the cell holders 2 with the connection means 3d of the fourth embodiment, the elastic rod 38 is stretched to arrange it surrounding the protruding pin 39. Additionally, the temperature of said protruding pin 39 should be above the final transformation temperature of the austenitic phase A_{f} of the shape memory alloy it is made of, so that it recovers its shape when it is in its first configuration.

In an alternative embodiment wherein the elastic rod 31 is made of a shape memory alloy the temperature of which is greater than the final transformation temperature of the austenitic phase Af of said shape memory alloy while the pressing device is under working conditions, in order to couple the cell holders 2 with the connection means 3d of the fourth embodiment, the temperature of the elastic rod 31 should be below the starting transformation temperature of the martensitic phase Mₛ of its shape memory alloy, preferably under its final transformation temperature of the martensitic phase M_{f} of its shape memory alloy in order to reduce the load necessary to stretch and arrange it surrounding the protruding pin 39.

In the embodiments of the pressing device 1 shown in the figures, the cross-section of the elastic rod 31 is preferably circular when the latter is cut by a plane perpendicular to the stacking direction. However, in other embodiments not shown in the figures, the cross-section of said elastic rod 31 may be square, or such that the ratio between the dimensions of said cross-section in the two axes defining the plane in which said cross-section is arranged has a ratio of less than 1.

In other embodiments not shown in the figures both rod ends are releasable ends from their corresponding support element 32a, 32b, 32c, 32'. Alternatively, only one of the two rod ends is a releasable end 311 from the corresponding support element 31a, 32b, 32c, the other end being a non-releasable end 312, said non-releasable end 312 being coupled in an articulated manner to the other support element 32', 32d', or even directly fixed to the corresponding cell holder 2.

In a preferred embodiment, one, two, or three battery cells 11 are arranged between every two adjacent cell holders 2, preferably one, as it is the case in the embodiment shown in figure 1.

The invention also relates to a battery comprising a battery cell stack 10 comprising a plurality of battery cells 11, preferably of the prismatic type or of the pouch type, and a pressing device 1 according to any of the embodiments disclosed. As already mentioned, each battery cell 11 of the battery of the invention comprises a casing where the respective anode, cathode, and electrolyte are housed. In the embodiment of figure 1, the cell holders 2 are adjacent to the casing of the corresponding battery cell 11. These cell holders 2 are preferably plates having two lateral wings, so that they have a U-shaped section. A central portion of the plates between the two lateral wings is preferably configured to be in contact with the battery cell 11, and the connecting means 3a, 3b, 3c, 3d of the pressing device 1 are preferably arranged in the lateral wings.

In the embodiment of figure 1, the connecting means 3a are arranged following a staggered pattern in the stacking direction. The battery cell stack 10 comprises a front side, a rear side, and four lateral sides facing each other in pairs. The connecting means 3a are arranged next to two opposite lateral sides of the battery cell stack 10. Additionally, only one battery cell 11 is arranged between every two adjacent cell holders 2. However, in other embodiments not shown in the figures the connecting means may be arranged following a different pattern, or next to other lateral sides of the battery cell stack 10.

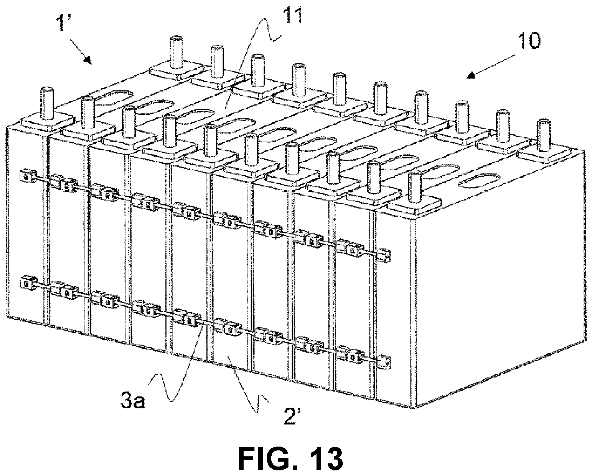

In an alternative embodiment of the battery of the invention, as it is the case in the battery of figure 13, the cell holders 2' are the casings of the battery cells 11, they are not separate plates. In said embodiment, the battery comprises a battery cell stack 10 comprising a plurality of battery cells 11, preferably of the prismatic type or of the pouch type, which are arranged stacked in a stacking direction, and a pressing device 1'. Each battery cell 11 comprises an anode, a cathode, an electrolyte, and a casing where the respective anode, cathode and electrolyte are housed. The pressing device 1' comprises a plurality of cell holders 2' arranged one after another in the stacking direction, each cell holder 2' being coupled to another cell holder 2' by means of connecting means 3a, 3b, 3c, 3d. The connecting means 3a, 3b, 3c, 3d comprise a stimulus-sensitive element made of a shape memory material, the stimulus-sensitive element changing from a first configuration to a second configuration in response to a stimulus, the connecting means 3a, 3b, 3c, 3d coupling the cell holders 2' when the stimulus-sensitive element is in the first configuration, and the connecting means 3a, 3b, 3c, 3d releasing the cell holders 2' when the stimulus-sensitive element is in the second configuration.

That is to say, this alternative embodiment of the battery only differs from the one described above in that the cell holders 2', instead of being separate plates arranged between the battery cells 11, are the casings of said battery cells 11, the connecting means 3a, 3b, 3c, 3d being thus configured to connect said casings. Different embodiments of the pressing device 1' of this alternative embodiment of the battery are possible by using the connecting means 3a, 3b, 3c, 3d disclosed above and depicted in figures 2 to 12. The technical features described of the connecting means 3a, 3b, 3c, 3d in any of their embodiments are thus valid for the battery 1, 1' described in any of its embodiments.

In the embodiment shown in figure 13, each battery cell casing is coupled to each adjacent battery cell casing by means of connecting means 3a. However, in other embodiments, one or more battery cells 11 can be arranged between two coupled battery cell casings.

In an embodiment of the battery of the invention, the battery cells 11 are conventional battery cells 11 whose anode and cathode are immersed in a liquid electrolyte. However, in another embodiment, the battery cells 11 are solid-state battery cells 11 whose electrolyte is a solid electrolyte interposed between the anode and the cathode.

The invention also relates to a method for removing at least one battery cell 11 from a battery according to the invention. The method comprises the steps of:
- identifying the at least one battery cell 11 to be removed in the battery cell stack 10,
- identifying the connecting means 3a, 3b, 3c, 3d coupling the two cell holders 2, 2' to be released,
- releasing said connecting means 3a, 3b, 3c, 3d by subjecting the stimulus-sensitive element to the stimulus, and
- removing the at least one battery cell 11 from the battery.

When the method of the invention is applied in an embodiment of the battery of the invention in which the cell holders 2 are plates separate from the battery cells 11, as for example in the battery shown in figure 1, identifying the connecting means 3a, 3b, 3c, 3d to be released comprises:
- identifying the two cell holders 2 adjacent to the battery cell 11 to be removed in the stacking direction between which said battery cell 11 is arranged, and
- identifying the connecting means 3a, 3b, 3c, 3d coupling both cell holders 2

However, when the method of the invention is applied in an embodiment of the battery of the invention in which the cell holders 2' are the casings of the battery cells 11, as for example in the battery shown in figure 13, identifying the connecting means 3a, 3b, 3c, 3d to be released comprises:
- identifying the cell holders 2' or casings coupled to the casing of the battery cell 11 to be removed, and
- identifying the connecting means 3a, 3b, 3c, 3d coupling said cell holders 2' with the casing of the battery cell to be removed.

The described features of the battery of the invention in any of its embodiments are valid for the method described in any of its embodiments and vice versa.

## Claims

1. Pressing device for a battery cell stack (10) comprising a plurality of battery cells (11) which are arranged stacked in a stacking direction, each battery cell (11) comprising an anode, a cathode, and an electrolyte, the pressing device (1) comprising a plurality of cell holders (2) arranged one after another in the stacking direction, such that at least one battery cell (11) is arranged between every two adjacent cell holders (2), each cell holder (2) being coupled to each adjacent cell holder (2) by means of connecting means (3a, 3b, 3c, 3d), **characterised in that** the connecting means (3a, 3b, 3c, 3d) comprise a stimulus-sensitive element made of a shape memory material, the stimulus-sensitive element changing from a first configuration to a second configuration in response to a stimulus, the connecting means (3a, 3b, 3c, 3d) coupling the cell holders (2) when the stimulus-sensitive element is in the first configuration, and the connecting means (3a, 3b, 3c, 3d) releasing the cell holders (2) when the stimulus-sensitive element is in the second configuration.

2. Pressing device according to claim 1, wherein
the shape memory material is a shape memory alloy or a shape memory polymer that responds to a temperature change, the stimulus being a temperature change, the stimulus-sensitive element being in the first configuration when the temperature of the stimulus-sensitive element is in a first temperature range, and the stimulus-sensitive element being in the second configuration when the temperature of the stimulus-sensitive element is in a second temperature range, the first temperature range comprising the temperatures of the stimulus-sensitive element when the pressing device (1) is under working conditions, or
the shape memory material is a magnetic shape memory alloy, the stimulus being a magnetic field configured to change the stimulus-sensitive material from the first configuration to the second configuration, or
the shape memory material is a shape memory polymer that responds to a light stimulus, the stimulus being the application of a light configured to change the stimulus-sensitive material from the first configuration to the second configuration.

3. Pressing device according to claim 1 or 2, wherein the stimulus-sensitive element is made of a two-way shape memory material, the stimulus-sensitive element being configured to have a first shape in the first configuration, and a second shape in the second configuration.

4. Pressing device according to any of claims 1 to 3, wherein the connecting means (3a, 3b, 3c, 3d) comprise a support element (32a, 32b, 32c, 32', 32d, 32d') fixed to each of the two cell holders (2), and an elastic rod (31, 38) coupled to both support elements (32a, 32b, 32c, 32', 32d, 32d') when the stimulus-sensitive element of the connecting means (3a, 3b, 3c, 3d) is in the first configuration, the elastic rod (31, 38) being configured to allow said cell holders (2) to move apart or move closer together in the stacking direction with an increase or a decrease in the thickness of the at least one cell arranged between them exerting a pressure on said at least one cell when the stimulus-sensitive element of the connecting means (3a, 3b, 3c, 3d) is in the first configuration.

5. Pressing device according to claim 4, wherein the elastic rod (31, 38) is made of a shape memory alloy, a final transformation temperature of the austenitic phase (A_{f}) of said shape memory alloy being lower than a temperature of said elastic rod (31, 38) while the pressing device (1) is under working conditions.

6. Pressing device according to claims 4 or 5, wherein the elastic rod (31) comprises two rod ends (311, 312), each rod end (311, 312) being coupled to a respective support element (32a, 32b, 32c, 32'), such that at least one of said rod ends (311) is releasable from the respective support element (32a, 32b, 32c) when the stimulus-sensitive element of the connecting means (3a, 3b, 3c) is in the second configuration, the elastic rod (31) comprising a rod head (36) at the at least one releasable end (311).

7. Pressing device according to claim 6, wherein when the connecting means (3a, 3b, 3c, 3d) couple the cell holders (2), the rod head (36) is housed in the respective support element (32a, 32b) and the stimulus-sensitive element is a retaining element (34) arranged in said support element (32a, 32b) and configured to clamp the elastic rod (31) when it is in the first configuration, such that, when the retaining element (34) is in the second configuration, said retaining element (34) is configured to allow the rod head (36) to pass through said retaining element (34).

8. Pressing device according to claim 6, wherein the stimulus-sensitive element is the elastic rod (31), the connecting means (3c) further comprising a compression spring (33) housed in the support element (32c) from which the releasable end (311) releases, such that in the first configuration the compressive force of the elastic rod (31) is greater than the compressive force of the compression spring (33), such that the rod head (36) abuts and compresses said compression spring (33) and thus remains housed in a housing (324) of said support element (32c), and such that in the second configuration the compressive force of the compression spring (33) is greater than the compressive force of the elastic rod (31) such that the compression spring (33) expands and pushes the rod head (36) out of the housing (324) of said support element (32c).

9. Pressing device according to claim 8, wherein the support element (32c) from which the releasable end (311) releases comprises a curved wall (323) facing the rod head (36) in the first configuration, said curved wall (323) being configured to direct the rod head (36) out of said support element (32c) in the second configuration.

10. Pressing device according to claims 4 ∘ 5, wherein the elastic rod (38) has a first end (311') and a second end (312'), both ends (311', 312') being fixed to one of the support elements (32d'), and the stimulus-sensitive element being the other support element (32d), said other support element (32d) being in the form of a protruding pin (39), the elastic rod (38) surrounding the protruding pin (39) and abutting on it when the protruding pin (39) is in the first configuration, such that in the second configuration said protruding pin (39) is deformed allowing the elastic rod (38) to be released from said protruding pin (39).

11. Pressing device according to any of the preceding claims, wherein one, two, or three battery cells (11) are arranged between every two adjacent cell holders (2), preferably one.

12. Battery comprising a battery cell stack (10) comprising a plurality of battery cells (11) which are arranged stacked in a stacking direction, each battery cell (11) comprising an anode, a cathode, an electrolyte, and a casing housing the anode, the cathode, and the electrolyte, and a pressing device (1) according to any of the preceding claims.

13. Battery comprising a battery cell stack (10) comprising a plurality of battery cells (11) which are arranged stacked in a stacking direction, and a pressing device (1'), each battery cell (11) comprising an anode, a cathode, an electrolyte, and a casing housing the anode, the cathode, and the electrolyte, the pressing device (1') comprising a plurality of cell holders (2') arranged one after another in the stacking direction, each cell holder (2') being coupled to another cell holder (2') by means of connecting means (3a, 3b, 3c, 3d), **characterised in that** the cell holders (2') are the casings of the battery cells (11), and **in that** the connecting means (3a, 3b, 3c, 3d) comprise a stimulus-sensitive element made of a shape memory material, the stimulus-sensitive element changing from a first configuration to a second configuration in response to a stimulus, the connecting means (3a, 3b, 3c, 3d) coupling the cell holders (2') when the stimulus-sensitive element is in the first configuration, and the connecting means (3a, 3b, 3c, 3d) releasing the cell holders (2') when the stimulus-sensitive element is in the second configuration.

14. Battery according to claim 13, wherein each cell holder (2') is coupled to each adjacent cell holder (2') by means of connecting means (3a, 3b, 3c, 3d).

15. Method for removing at least one battery cell (11) from a battery according to claims 12 to 14, comprising:
- identifying the at least one battery cell (11) to be removed in the battery cell stack (10),
- identifying the connecting means (3a, 3b, 3c, 3d) coupling the cell holders (2, 2') to be released,
- releasing said connecting means (3a, 3b, 3c, 3d) by subjecting the stimulus-sensitive element to the stimulus, and
- removing the at least one battery cell (11) from the battery.
